# EUROPÄISCHE PATENTANMELDUNG

(11) **EP 4 365 801 A2**
(43) Veröffentlichungstag der Anmeldung: **08.05.2024**
(21) Anmeldenummer: 24150392.9
(22) Anmeldetag: 27.06.2014
(51) Int. Cl.: G06Q 10/10

(54) **PLATTFORM-VORRICHTUNG FÜR AKTIV VERBREITETES QUALITATIVES SCHWARM-WISSEN**

(30) Priorität: 28.11.2013 WO PCT/DE2013/100400
(62) Teilanmeldung aus: 14766100.3
(71) Anmelder: Faulwetter, Patrick, Marina del Rey, CA 90292 (US)
(72) Erfinder: Die Erfindernennung liegt noch nicht vor
(74) Vertreter: Kiessling, Christian

(57) **Zusammenfassung**

Bei einer mit einer Mehrzahl mittels einer Kennung identifizierbarer Nutzer-Teilnehmer vernetzbare webplatzierte Plattform-Vorrichtung (100) zum Sammeln und Bearbeiten von in jeweils mittels einer vorgebbaren Kodierung identifizierbaren, einer Mehrzahl unterschiedlicher Themen zugeordneten Speicherplätzen (110) einer Plattform (100) gespeicherten Informationen seitens der Nutzer-Teilnehmer, wird eine aktiv automatisierte Distribution von von Seiten der Nutzer-Teilnehmer gesammelter Information dadurch ermöglicht, dass die Speicherplätze (110) auf der Plattform (100) jeweils von einer dualen Einheit (DuU) gebildet sind, wobei eine duale Einheit (DuU) jeweils einen einem vorgebbaren Thema zugeordneten und mit seitens eines Initial-Teilnehmers formulierten Initial-Informationen (114) versehenen, seitens eines einzelnen Nutzer-Teilnehmers nicht editierbaren ersten Speicherplatz (111) sowie einen dem ersten Speicherplatz (111) zugeordneten zweiten Speicherplatz (112) umfasst, der seitens eines jeden einzelnen Nutzer-Teilnehmers editierbar ist und für eine Eingabe von Zusatz-Informationen (113) bezüglich der auf dem ersten Speicherplatz (111) gespeicherten Initial-Information (114) seitens der Mehrzahl von Nutzer-Teilnehmern ausgelegt ist.

## Beschreibung

Die vorliegende Erfindung betrifft eine mit einer Mehrzahl mittels einer Kennung identifizierbarer Nutzer-Teilnehmer vernetzbare web-platzierte Plattform-Vorrichtung zum Sammeln und Bearbeiten von in jeweils mittels einer vorgebbaren Kodierung identifizierbaren, einer Mehrzahl unterschiedlicher Themen zugeordneten Speicherplätzen einer Plattform gespeicherten Informationen seitens der Nutzer-Teilnehmer.

Plattform-Vorrichtungen der eingangs genannten Art sind im Stand der Technik für eine Vielzahl von Anwendungen bekannt. Unter anderem werden sie auch im weltweiten Internet betrieben. Die bekannten Plattform-Vorrichtungen weisen indes den Nachteil auf, dass eine spezielle Auswahl vorgebbarer Verknüpfungen, und dabei nach vorgebbaren Kriterien durchführbare Verknüpfungen nicht realisierbar sind. Die Ursache dafür ist zum einen darin zu sehen, dass die derzeitigen Plattformen Informationen speichern, ohne dass diesen Informationen streng vorgebbare Bearbeitungskriterien und streng vorgebbare Evaluierungskriterien beigemessen werden.

Zum anderen sind die bekannten Plattform-Vorrichtungen nicht effektiv in der Verbreitung von Schwarmwissen.

Aufgabe der Erfindung ist es deshalb, eine Plattform-Vorrichtung zu schaffen, mittels derer in einem ersten Speicher gespeicherte Informationen nach streng vorgebbaren Bearbeitungskriterien seitens der Netz-Teilnehmer bewertbar und mit Zusätzen versehbar oder anderweitig änderbar sind und mittels derer eine effektive automatisierte Verbreitung insbesondere von eine qualitative Information darstellendem Schwarmwissen ermöglicht ist.

Für eine Plattform-Vorrichtung der eingangs genannten Art wird diese Aufgabe dadurch gelöst, dass die Speicherplätze auf der Plattform jeweils von einer dualen Einheit (DuU) gebildet sind, wobei eine duale Einheit (DuU) jeweils einen einem vorgebbaren Thema zugeordneten und mit seitens eines Initial-Teilnehmers formulierten Initial-Informationen versehenen, seitens eines einzelnen Nutzer-Teilnehmers nicht editierbaren ersten Speicherplatz sowie einen dem ersten Speicherplatz zugeordneten zweiten Speicherplatz umfasst, der seitens eines jeden einzelnen Nutzer-Teilnehmers editierbar ist und für eine Eingabe von Zusatz-Informationen bezüglich der auf dem ersten Speicherplatz gespeicherten Initial-Information seitens der Mehrzahl von Nutzer-Teilnehmern ausgelegt ist, wobei eine Identifizierungs-Einrichtung vorgesehen ist, um alle in einen vorgegebenen Speicherplatz Zusatz-Information einbringenden Nutzer-Teilnehmer anhand ihrer Kennung zu identifizieren und in einem Nutzer-Teilnehmer-Register zu speichern, um bei Eingabe einer jeweils neuen Zusatz-Information in den zweiten Speicherplatz seitens eines beliebigen identifizierten Nutzer-Teilnehmers eine die neue Zusatz-Information enthaltende automatisierte Übermittlung (DuU-feed) mindestens eines Teils der betreffenden dualen Einheit an zumindest einen Teil der in dem Nutzer-Teilnehmer-Register gespeicherten anderen registrierten Nutzer-Teilnehmer mittels einer dafür vorgesehenen geeigneten Sendeeinheit vorzunehmen.

Bevorzugte Ausführungsformen der Erfindung sind Gegenstand der Unteransprüche.

Bei der erfindungsgemäßen Plattform-Vorrichtung wird durch die Merkmalskombination, dass die Speicherplätze auf der Plattform jeweils von einer dualen Einheit (DuU) gebildet sind, wobei eine duale Einheit (DuU) jeweils einen einem vorgebbaren Thema zugeordneten und mit seitens eines Initial-Teilnehmers formulierten Initial-Informationen versehenen, seitens eines einzelnen Nutzer-Teilnehmers nicht editierbaren ersten Speicherplatz sowie einen dem ersten Speicherplatz zugeordneten zweiten Speicherplatz umfasst, der seitens eines jeden einzelnen Nutzer-Teilnehmers editierbar ist und für eine Eingabe von Zusatz-Informationen bezüglich der auf dem ersten Speicherplatz gespeicherten Initial-Information seitens der Mehrzahl von Nutzer-Teilnehmern ausgelegt ist, wobei eine Identifizierungs-Einrichtung vorgesehen ist, um alle in einen vorgegebenen Speicherplatz Zusatz-Information einbringenden Nutzer-Teilnehmer anhand ihrer Kennung zu identifizieren und in einem Nutzer-Teilnehmer-Register zu speichern, um bei Eingabe einer jeweils neuen Zusatz-Information in den zweiten Speicherplatz seitens eines beliebigen identifizierten Nutzer-Teilnehmers eine die neue Zusatz-Information enthaltende automatisierte Übermittlung (DuU-feed) mindestens eines Teils der betreffenden dualen Einheit an zumindest einen Teil der in dem Nutzer-Teilnehmer-Register gespeicherten anderen registrierten Nutzer-Teilnehmer mittels einer Sendeeinheit vorzunehmen, erreicht, dass über eine Bildung dualer Einheiten Informationen, insbesondere solche, die eine qualitative Information darstellen, bezüglich sehr spezifischer Bearbeitungsvorgaben bearbeitbar, änderbar und dann speicherbar sind, wobei die in Form von Einzelbewertungen, Einzelergänzungen und Einzelkommentaren eingebrachten Informationen eine Form von Schwarmwissen bilden, das mittels streng vorgebbarer Kriterien aktiv per aktiv automatisierter Übermittlung (DuU-feed) an eine vorherbestimmbare Menge von Nutzer-Teilnehmern übermittelbar ist.

Ziel und Zweck eines von der Mehrzahl der Nutzer-Teilnehmer durchführbaren Bearbeitungsvorgangs ist es dabei zuförderst, eine von einem Initial-Autor unter einem ersten Speicherplatz einer dualen Einheit eingelesene Initial-Information seitens der Nutzer-Teilnehmer bewertbar und bearbeitbar zu machen, um die Initial-Information mit einer Verlässlichkeits-Benotung bzw. Verlässlichkeits-Bewertung zu versehen, die am Ende eines erfindungsgemäß durchgeführten Bearbeitungsvorgangs in den ersten Speicherplatz eingetragen ist und für die Allgemeinheit eine übersichtliche Schwarm-Bewertung seitens der Nutzer-Teilnehmer darstellt.

Gemäß einer ersten bevorzugten Ausführungsform der erfindungsgemäßen Vorrichtung ist vorgesehen, dass eine Zusatzinformation von einer qualitativen Bewertung der auf dem ersten Speicherplatz gespeicherten Informationen seitens der Mehrzahl von Nutzer-Teilnehmern gebildet ist.

Zu diesem Zweck ist vorzugsweise mindestens eine Berechnungs-Einrichtung vorgesehen, um aufgrund der eingelesenen qualitativen Bewertungen seitens der Nutzer-Teilnehmer eine allgemeine Bewertungs-Information zu erstellen.

Eine die neue Zusatz-Information enthaltende Übermittlung (DuU-feed) kann dabei lediglich den Inhalt des ersten Speicherplatzes umfassen oder je nach Vorgabe alternativ den Inhalt eines ersten Speicherplatzes sowie den Inhalt des dem ersten Speicherplatz zugeordneten zweiten Speicherplatzes umfassen.

Des Weiteren kann vorgesehen sein, dass eine die neue Zusatz-Information enthaltende Übermittlung (DuU-feed) an alle in dem Nutzer-Teilnehmer-Register gespeicherten anderen registrierten Nutzer-Teilnehmer erfolgt. Alternativ können die Kennungen der identifizierten Nutzer-Teilnehmer geeignet ausgebildet sein, um vorherbestimmte Untergruppen von Nutzer-Teilnehmern zu bilden, um die Kennungen nutzende Nutzer-Teilnehmer-Filter zu schaffen, um lediglich spezifizierte Übermittlungen (DuU-feeds) an Nutzer-Teilnehmer einer oder mehr vorherbestimmter Untergruppen zu senden.

Als Kriterien für die Bildung von Untergruppen von Nutzer-Teilnehmern kommen Merkmale wie Alter, Geschlecht, regionale Ansiedlung, Häufung vorherbestimmter definierter Webaktivitäten, Neigungen und nachgewiesene Interessen usw. der einzelnen Nutzer-Teilnehmer in Betracht.

Eine Übermittlung (DuU-feed) an die Kennung eines identifizierten Nutzer-Teilnehmers erfolgt vorzugsweise anhand einer durch die Eingabe der jeweils weiteren Zusatz-Information aktivierten Sendeeinrichtung zum Schaffen eines Informations-Links an in dem Nutzer-Teilnehmer-Register gespeicherte andere registrierte Nutzer-Teilnehmer.

Gemäß einer wichtigen bevorzugten Ausführungsform der erfindungsgemäßen Vorrichtung ist vorgesehen, dass in dem editierbaren zweiten Speicherplatz Zusatz-Informationen in Form mittels mindestens der Berechnungs-Einrichtung ermittelter, qualitativer Bewertungen der auf dem ersten Speicherplatz gespeicherten Informationen seitens der Nutzer-Teilnehmer einlesbar und jeweils in einem betreffenden Speicher speicherbar sind, wobei die mindestens eine Berechnungs-Einrichtung ausgelegt ist, um aufgrund eingelesener qualitativer Bewertungen eine allgemeine Bewertungs-Information zu erstellen.

Die mindestens eine Berechnungs-Einrichtung ist vorzugsweise ausgelegt, um eine qualitative Bewertung mittels einer jedem Nutzer-Teilnehmer ermöglichte Eingabe individuell zu vergebender Punkte einer Punkteskala mit vorherbestimmter Punktemenge durchzuführen, wobei für jede Eingabe die vergebenen Punkte in einem betreffenden Punktespeicher speicherbar sind. Eine Punkteskala kann dabei beispielsweise ausgelegt sein, um eine Vergabe von Punkten zwischen 0 und 10 oder 0 und 100 seitens eines jeden der Nutzer-Teilnehmer zu ermöglichen, je nach dem geforderten Maß an Genauigkeit einer Bewertung.

Vorzugsweise ist eine erste Berechnungs-Einrichtung vorgesehen, die eine Mittelwertbildung bezüglich der summarisch auf dem zweiten Speicherplatz eingelesenen, von jeweils unterschiedlichen Nutzer-Teilnehmern vergebenen Punkte vornimmt und die betreffende Zahl in dem zweiten Speicherplatz speichert, wobei ein Punkte-Mittelwert berechnet wird durch Addition aller Punkte zwischen 0 und einer maximalen Punktezahl der Punkteskala, die Nutzer-Teilnehmer im Wege einer jeweiligen Bewertung vergeben haben, geteilt durch die Anzahl von Nutzer-Teilnehmern, die jeweils eine Bewertung abgegeben haben.

Darüber hinaus ist vorzugsweise eine zweite Berechnungs-Einrichtung vorgesehen, die eine Varianzbildung bezüglich der summarisch auf dem zweiten Speicherplatz eingelesenen, von jeweils unterschiedlichen Nutzer-Teilnehmern vergebenen Punkte vornimmt und die betreffende Zahl in dem zweiten Speicherplatz speichert, wobei die Varianz als mittlere Punkte-Differenz zu dem seitens der ersten Berechnungs-Einrichtung ermittelten Punkte-Mittelwert definiert ist.

Eine die neue Zusatz-Information enthaltende Übermittlung (DuU-feed) kann dabei lediglich den Inhalt des ersten Speicherplatzes umfassen oder je nach Vorgabe alternativ den Inhalt eines ersten Speicherplatzes sowie den Inhalt des dem ersten Speicherplatz zugeordneten zweiten Speicherplatzes umfassen.

Des Weiteren kann vorgesehen sein, dass eine die neue Zusatz-Information enthaltende Übermittlung (DuU-feed) an alle in dem Nutzer-Teilnehmer-Register gespeicherten anderen registrierten Nutzer-Teilnehmer erfolgt. Alternativ können die Kennungen der identifizierten Nutzer-Teilnehmer geeignet ausgebildet sein, um vorherbestimmte Untergruppen von Nutzer-Teilnehmern zu bilden, um die Kennungen nutzende Nutzer-Teilnehmer-Filter zu schaffen, um lediglich spezifizierte Übermittlungen (DuU-feeds) an Nutzer-Teilnehmer einer oder mehr vorherbestimmter Untergruppen zu senden.

Als Kriterien für die Bildung von Untergruppen von Nutzer-Teilnehmern kommen Merkmale wie Alter, Geschlecht, regionale Ansiedlung, Häufung vorherbestimmter definierter Webaktivitäten, Neigungen und nachgewiesene Interessen usw. der einzelnen Nutzer-Teilnehmer in Betracht.

Eine Übermittlung (DuU-feed) an die Kennung eines identifizierten Nutzer-Teilnehmers erfolgt vorzugsweise anhand einer durch die Eingabe der jeweils weiteren Zusatz-Information aktivierten Sendeeinrichtung zum Schaffen eines Informations-Links an in dem Nutzer-Teilnehmer-Register gespeicherte andere registrierte Nutzer-Teilnehmer.

Gemäß einer weiteren bevorzugten Ausführungsform der erfindungsgemäßen Vorrichtung ist eine erste Kopier-Einrichtung vorgesehen, die nach Ablauf vorgebbarer Zeitabschnitte sukzessive hintereinander die auf dem zweiten Speicherplatz gespeicherten qualitativen Bewertungen als nützliche Informationen interpretiert und auf den ersten Speicherplatz überträgt und die diesbezüglichen vorherigen Informationen auf dem ersten Speicherplatz überschreibt.

Zusätzlich ist dabei vorzugsweise eine Zeitgeber-Einrichtung vorgesehen, die in vorgebbaren konstanten Zeitabschnitten an die erste und zweite Berechnungs-Einrichtung sowie die erste Kopier-Einrichtung Reset-Signale sendet, um die betreffenden Einrichtungen nach Ablauf eines jeweiligen vorgebbaren Zeitabschnittes auf Null zu setzen und die jeweils zugewiesene Funktion in einem jeweils nachgeordneten folgenden Zeitabschnitt gleicher Länge zu wiederholen.

Die erfindungsgemäße Vorrichtung ist dann besonders versatil einsetzbar, wenn jedem der Teilnehmer eine Erstplatzierung einer dualen Einheit mit erstem und zweitem Speicherplatz ermöglicht ist.

Die erfindungsgemäße Vorrichtung wird im Folgenden anhand einer bevorzugten Ausführungsform erläutert, die in der Figur der Zeichnung dargestellt ist. Es zeigt:

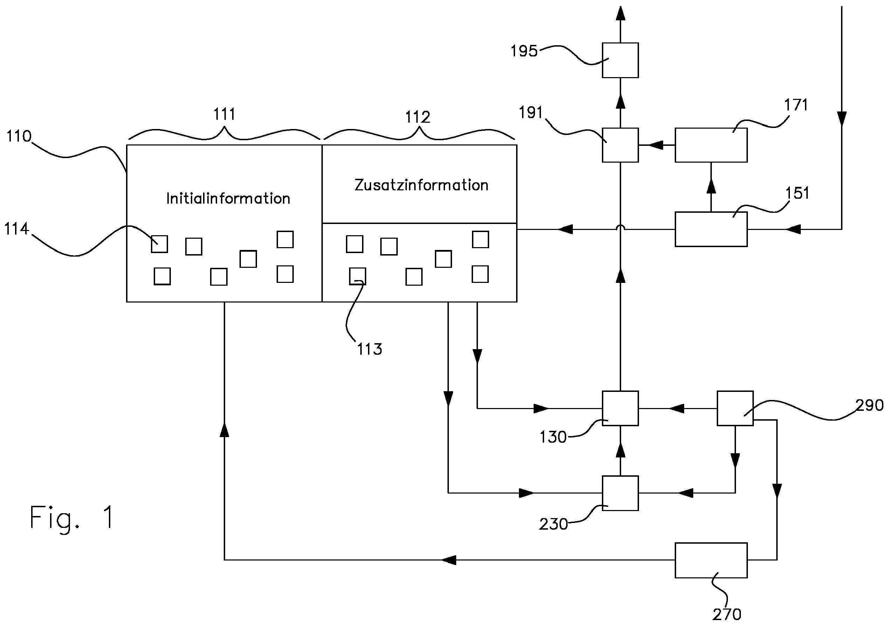

- Fig. 1: eine prinzipielle Ausgestaltung einer dualen Einheit (DuU) entsprechend einer bevorzugten Ausführungsform der Erfindung in Form eines Blockdiagramms.

Die erfindungsgemäße web-platzierte Plattform-Vorrichtung 100 ist mit einer Mehrzahl mittels einer Kennung identifizierbarer Nutzer-Teilnehmer vernetzbar und zum Sammeln und Bearbeiten von auf einer Mehrzahl von jeweils mittels einer vorgebbaren Kodierung identifizierbaren und jeweils einem vorgegebenen Thema zugeordneten Speicherplätzen 110 einer Plattform gespeicherten Informationen seitens der Nutzer-Teilnehmer ausgelegt.

Die in eine Vielzahl unterschiedlicher Themen unterteilten Speicherplätze 110 sind auf der Plattform 100 jeweils von einer dualen Einheit (DuU) gebildet, wobei eine duale Einheit (DuU) jeweils einen einem vorgebbaren Thema zugeordneten und mit seitens eines Initial-Teilnehmers formulierten Initial-Informationen 114 versehenen, seitens eines einzelnen Nutzer-Teilnehmers nicht editierbaren ersten Speicherplatz 111 sowie einen dem ersten Speicherplatz 111 zugeordneten zweiten Speicherplatz 112 umfasst, der seitens eines jeden einzelnen Nutzer-Teilnehmers editierbar ist und für eine Eingabe von Zusatz-Informationen 113 bezüglich der auf dem ersten Speicherplatz 111 gespeicherten Initial-Information 114 seitens der Mehrzahl von Nutzer-Teilnehmern ausgelegt ist.

Dabei ist eine Identifizierungs-Einrichtung 151 vorgesehen, um alle in einen vorgegebenen Speicherplatz Zusatz-Information 113 einbringenden Nutzer-Teilnehmer anhand ihrer Kennung zu identifizieren und in einem Nutzer-Teilnehmer-Register 171 zu speichern, um bei Eingabe einer jeweils neuen Zusatz-Information 113 in den zweiten Speicherplatz 112 seitens eines beliebigen identifizierten Nutzer-Teilnehmers eine die neue Zusatz-Information 113 enthaltende automatisierte Übermittlung (DuU-feed) mindestens eines Teils der betreffenden dualen Einheit an zumindest einen Teil der in dem Nutzer-Teilnehmer-Register 171 gespeicherten anderen registrierten Nutzer-Teilnehmer mittels einer dafür vorgesehenen Sendeeinheit 195 vorzunehmen.

Eine Zusatzinformation ist dabei von einer qualitativen Bewertung der auf dem ersten Speicherplatz 111 gespeicherten Informationen seitens der Mehrzahl von Nutzer-Teilnehmern gebildet. Zu diesem Zweck ist mindestens eine Berechnungs-Einrichtung 130 vorgesehen, um aufgrund der eingelesenen qualitativen Bewertungen seitens der Nutzer-Teilnehmer eine allgemeine Bewertungs-Information zu erstellen.

Eine eine jeweils neue Zusatz-Information 113 enthaltende Übermittlung (DuU-feed) umfasst den Inhalt eines ersten Speicherplatzes 111 sowie den Inhalt des dem ersten Speicherplatz 111 zugeordneten zweiten Speicherplatzes 112.

Die Kennungen der identifizierten Nutzer-Teilnehmer sind ausgelegt, um vorherbestimmte Untergruppen von Nutzer-Teilnehmern zu bilden, um die Kennungen nutzende Nutzer-Teilnehmer-Filter zu schaffen, um lediglich spezifizierte Übermittlungen (DuU-feeds) an Nutzer-Teilnehmer einer oder mehr vorherbestimmter Untergruppen zu senden.

Als Kriterien für die Bildung von Untergruppen von Nutzer-Teilnehmern werden Alter, Geschlecht, regionale Ansiedlung, Häufung vorherbestimmter definierter Webaktivitäten usw. der einzelnen Nutzer-Teilnehmer herangezogen.

Eine Übermittlung (DuU-feed) an die Kennung eines identifizierten Nutzer-Teilnehmers erfolgt mittels einer durch die Eingabe der jeweils weiteren Zusatz-Information 113 aktivierten Sendeeinrichtung 195 zum Schaffen eines Informations-Links an in dem Nutzer-Teilnehmer-Register gespeicherte andere registrierte Nutzer-Teilnehmer.

In dem editierbaren zweiten Speicherplatz 112 sind Zusatz-Informationen in Form mittels mindestens einer Berechnungs-Einrichtung 130 ermittelter, qualitativer Bewertungen der auf dem ersten Speicherplatz 111 gespeicherten Informationen seitens der Nutzer-Teilnehmer einlesbar und speicherbar, wobei die mindestens eine Berechnungs-Einrichtung 130 ausgelegt ist, um aufgrund eingelesener qualitativer Bewertungen eine allgemeine Bewertungs-Information zu erstellen.

Die mindestens eine Berechnungs-Einrichtung 130 ist ausgelegt, um eine qualitative Bewertung mittels einer jedem Nutzer-Teilnehmer ermöglichten Eingabe individuell zu vergebender Punkte einer Punkteskala, mittels derer eine Vergabe von Punkten zwischen 0 und 100 seitens eines jeden der Nutzer-Teilnehmer ermöglicht ist.

Eine erste Berechnungs-Einrichtung 130 ist vorgesehen, die eine Mittelwertbildung bezüglich der summarisch auf dem zweiten Speicherplatz 112 eingelesenen, von jeweils unterschiedlichen Nutzer-Teilnehmern vergebenen Punkte vornimmt und die betreffende Zahl in dem zweiten Speicherplatz 112 speichert, wobei ein Punkte-Mittelwert berechnet wird durch Addition aller Punkte zwischen 0 und einer maximalen Punktezahl der Punkteskala, die Nutzer-Teilnehmer im Wege einer jeweiligen Bewertung vergeben haben, geteilt durch die Anzahl von Nutzer-Teilnehmern, die jeweils eine Bewertung abgegeben haben.

Eine zweite Berechnungs-Einrichtung 230 ist vorgesehen, die eine Varianzbildung bezüglich der summarisch auf dem zweiten Speicherplatz 112 eingelesenen, von jeweils unterschiedlichen Nutzer-Teilnehmern vergebenen Punkte vornimmt und die betreffende Zahl in dem zweiten Speicherplatz 112 speichert, wobei die Varianz als mittlere Punkte-Differenz zu dem seitens der ersten Berechnungs-Einrichtung 130 ermittelten Punkte-Mittelwert definiert ist.

Des Weiteren ist eine erste Kopier-Einrichtung 270 vorgesehen, die nach Ablauf vorgebbarer Zeitabschnitte sukzessive hintereinander die auf dem zweiten Speicherplatz 112 gespeicherten qualitativen Bewertungen als nützliche Informationen interpretiert und auf den ersten Speicherplatz 111 überträgt und die diesbezüglichen vorherigen Informationen auf dem ersten Speicherplatz 111 überschreibt.

Eine Zeitgeber-Einrichtung 290 ist vorgesehen, die in vorgebbaren konstanten Zeitabschnitten an die erste 130 und zweite Berechnungs-Einrichtung 230 sowie die erste Kopier-Einrichtung 270 Reset-Signale sendet, um die betreffenden Einrichtungen nach Ablauf eines jeweiligen vorgebbaren Zeitabschnittes auf Null zu setzen und die jeweils zugewiesene Funktion in einem jeweils nachgeordneten folgenden Zeitabschnitt gleicher Länge zu wiederholen.

Jedem der Nutzer-Teilnehmer ist auch eine Erstplatzierung einer dualen Einheit mit erstem 111 und zweitem Speicherplatz 112 als Initial-Teilnehmer ermöglicht.

Das oben erläuterte Ausführungsbeispiel der Erfindung dient lediglich dem Zweck eines besseren Verständnisses der durch die Ansprüche vorgegebenen erfindungsgemäßen Lehre, die als solche durch das Ausführungsbeispiel nicht eingeschränkt ist.

## Patentansprüche

1. Mit einer Mehrzahl mittels einer Kennung identifizierbarer Nutzer-Teilnehmer vernetzbare web-platzierte Plattform-Vorrichtung (100) zum Sammeln und Bearbeiten von in jeweils mittels einer vorgebbaren Kodierung identifizierbaren, einer Mehrzahl unterschiedlicher Themen zugeordneten Speicherplätzen (110) einer Plattform (100) gespeicherten Informationen seitens der Nutzer-Teilnehmer, **dadurch gekennzeichnet, dass** die Speicherplätze (110) auf der Plattform (100) jeweils von einer dualen Einheit (DuU) gebildet sind, wobei eine duale Einheit (DuU) jeweils einen einem vorgebbaren Thema zugeordneten und mit seitens eines Initial-Teilnehmers formulierten Initial-Informationen (114) versehenen, seitens eines einzelnen Nutzer-Teilnehmers nicht editierbaren ersten Speicherplatz (111) sowie einen dem ersten Speicherplatz (111) zugeordneten zweiten Speicherplatz (112) umfasst, der seitens eines jeden einzelnen Nutzer-Teilnehmers editierbar ist und für eine Eingabe von Zusatz-Informationen (113) bezüglich der auf dem ersten Speicherplatz (111) gespeicherten Initial-Information (114) seitens der Mehrzahl von Nutzer-Teilnehmern ausgelegt ist, wobei eine Identifizierungs-Einrichtung (151) vorgesehen ist, um alle in einen vorgegebenen Speicherplatz Zusatz-Information (113) einbringenden Nutzer-Teilnehmer anhand ihrer Kennung zu identifizieren und in einem Nutzer-Teilnehmer-Register (171) zu speichern, um bei Eingabe einer jeweils neuen Zusatz-Information (113) in den zweiten Speicherplatz (112) seitens eines beliebigen identifizierten Nutzer-Teilnehmers eine die neue Zusatz-Information (113) enthaltende automatisierte Übermittlung (DuU-feed) mindestens eines Teils der betreffenden dualen Einheit an zumindest einen Teil der in dem Nutzer-Teilnehmer-Register gespeicherten anderen registrierten Nutzer-Teilnehmer mittels einer Sendeeinheit (195) vorzunehmen, wobei
- eine Zusatzinformation (113) von einer qualitativen Bewertungen der auf dem ersten Speicherplatz (111) gespeicherten Informationen seitens der Mehrzahl von Nutzer-Teilnehmern gebildet ist,
- mindestens eine Berechnungs-Einrichtung (130) vorgesehen ist, um aufgrund der eingelesenen qualitativen Bewertungen seitens der Nutzer-Teilnehmer eine allgemeine Bewertungs-Information zu erstellen,
- eine eine jeweils neue Zusatz-Information (113) enthaltende Übermittlung (DuU-feed) lediglich den Inhalt des einem ersten Speicherplatz (111) zugeordneten zweiten Speicherplatz (112) umfasst,
- die Kennungen der identifizierten Nutzer-Teilnehmer geeignet sind, um vorherbestimmte Untergruppen von Nutzer-Teilnehmern zu bilden, um die Kennungen nutzende Nutzer-Teilnehmer-Filter zu schaffen, um lediglich spezifizierte Übermittlungen (DuU-feeds) an Nutzer-Teilnehmer einer oder mehr vorherbestimmter Untergruppen zu senden,
- eine Übermittlung (DuU-feed) an die Kennung eines identifizierten Nutzer-Teilnehmers mittels einer durch die Eingabe der jeweils weiteren Zusatz-Information (113) aktivierten Sendeeinrichtung (195) zum Schaffen eines Informations-Links an in dem Nutzer-Teilnehmer-Register (171) gespeicherte andere registrierte Nutzer-Teilnehmer erfolgt,
- in dem editierbaren zweiten Speicherplatz (112) Zusatz-Informationen in Form mittels mindestens einer Berechnungs-Einrichtung (130) ermittelter, qualitativer Bewertungen der auf dem ersten Speicherplatz (111) gespeicherten Informationen seitens der Nutzer-Teilnehmer einlesbar und jeweils in einem betreffenden Speicher speicherbar sind, wobei die mindestens eine Berechnungs-Einrichtung (130) ausgelegt ist, um aufgrund eingelesener qualitativer Bewertungen eine allgemeine Bewertungs-Information zu erstellen,
- eine erste Berechnungs-Einrichtung (130) vorgesehen ist, die eine Mittelwertbildung bezüglich der summarisch auf dem zweiten Speicherplatz (112) eingelesenen, von jeweils unterschiedlichen Nutzer-Teilnehmern vergebenen Punkte vornimmt und die betreffende Zahl in dem zweiten Speicherplatz (112) speichert, wobei ein Punkte-Mittelwert berechnet wird durch Addition aller Punkte zwischen 0 und einer maximalen Punktezahl der Punkteskala, die Nutzer-Teilnehmer im Wege einer jeweiligen Bewertung vergeben haben, geteilt durch die Anzahl von Nutzer-Teilnehmern, die jeweils eine Bewertung abgegeben haben.
1, 2, 3, 4, 7, 9, 10, 13

2. Vorrichtung nach Anspruch1 1, **dadurch gekennzeichnet, dass** eine eine jeweils neue Zusatz-Information (113) enthaltende Übermittlung (DuU-feed) den Inhalt eines ersten Speicherplatzes (111) sowie den Inhalt des dem ersten Speicherplatz (111) zugeordneten zweiten Speicherplatzes (112) umfasst.

3. Vorrichtung nach einem der Ansprüche 1 oder 2, **dadurch gekennzeichnet, dass** eine eine jeweils neue Zusatz-Information (113) enthaltende Übermittlung (DuU-feed) an alle in dem Nutzer-Teilnehmer-Register (171) gespeicherten anderen registrierten Nutzer-Teilnehmer erfolgt.

4. Vorrichtung nach Anspruch 3, **dadurch gekennzeichnet, dass** als Kriterien für die Bildung von Untergruppen von Nutzer-Teilnehmern Alter, Geschlecht, regionale Ansiedlung, Häufung vorherbestimmter definierter Webaktivitäten usw. der einzelnen Nutzer-Teilnehmer vorgesehen sind.

5. Vorrichtung nach einem der vorhergehenden Anspruche, **dadurch gekennzeichnet, dass** die mindestens eine Berechnungs-Einrichtung (130) ausgelegt ist, um eine qualitative Bewertung mittels einer jedem Nutzer-Teilnehmer ermöglichte Eingabe individuell zu vergebender Punkte einer Punkteskala mit vorherbestimmter Punktemenge durchzuführen, wobei für jede Eingabe die vergebenen Punkte in einem betreffenden Punktespeicher speicherbar sind.

6. Vorrichtung nach Anspruch 5, **dadurch gekennzeichnet, dass** die Punkteskala ausgelegt ist, um eine Vergabe von Punkten zwischen 0 und 100 seitens eines jeden der Nutzer-Teilnehmer zu ermöglichen.

7. Vorrichtung nach Anspruch 6, **dadurch gekennzeichnet, dass** eine zweite Berechnungs-Einrichtung (230) vorgesehen ist, die eine Varianzbildung bezüglich der summarisch auf dem zweiten Speicherplatz (112) eingelesenen, von jeweils unterschiedlichen Nutzer-Teilnehmern vergebenen Punkte vornimmt und die betreffende Zahl in dem zweiten Speicherplatz (112) speichert, wobei die Varianz als mittlere Punkte-Differenz zu dem seitens der ersten Berechnungs-Einrichtung (130) ermittelten Punkte-Mittelwert definiert ist.

8. Vorrichtung nach einem der Ansprüche 6 oder 7, **dadurch gekennzeichnet, dass** eine Kopier-Einrichtung (270) vorgesehen ist, die sukzessive hintereinander die am Endpunkt vorgebbarer Zeitabschnitte auf dem zweiten Speicherplatz (112) gespeicherten qualitativen Bewertungen als nützliche Informationen interpretiert und auf den ersten Speicherplatz (111) überträgt und die diesbezüglichen vorherigen Informationen auf dem ersten Speicherplatz (111) überschreibt.

9. Vorrichtung nach den Ansprüchen 6 bis 8, **dadurch gekennzeichnet, dass** eine Zeitgeber-Einrichtung (290) vorgesehen ist, die in vorgebbaren konstanten Zeitabschnitten an die erste und zweite Berechnungs-Einrichtung (130, 230) sowie die erste Kopier-Einrichtung (270) Reset-Signale sendet, um die betreffenden Einrichtungen nach Ablauf eines jeweiligen vorgebbaren Zeitabschnittes auf Null zu setzen und die jeweils zugewiesene Funktion in einem jeweils nachgeordneten folgenden Zeitabschnitt gleicher Länge zu wiederholen.

10. Vorrichtung nach einem der vorhergehenden Ansprüchen, **dadurch gekennzeichnet, dass** jedem der Teilnehmer eine Erstplatzierung einer dualen Einheit mit erstem (111) und zweitem Speicherplatz (112) ermöglicht ist.
